Europäisches Patentamt

European Patent Office

Office européen des brevets

(11) Publication number: **0 502 600 A2**

# EUROPEAN PATENT APPLICATION

(21) Application number: **92300346.1**

(22) Date of filing: **15.01.92**

(51) Int. Cl.5: **G09G 3/36**, G09G 1/16

(30) Priority: **05.03.91 US 664950**

(43) Date of publication of application:
**09.09.92 Bulletin 92/37**

(84) Designated Contracting States:
**AT BE CH DE DK ES FR GB GR IT LI LU NL PT SE**

(71) Applicant: **nVIEW CORPORATION**
**11835 Canon Boulevard**
**Newport News, Virginia 23606(US)**

(72) Inventor: **Vogeley, James H.**

210 York View Road
Yorktown, Virginia 23692(US)
Inventor: **Vogeley, Arthur W.**
210 York View Road
Yorktown, Virginia 23692(US)
Inventor: **Newton, Patrick H.**
3314 Pershing Court
Hampton, Virginia 23666(US)

(74) Representative: **Evershed, Michael**
**Saunders & Dolleymore 9, Rickmansworth Road**
**Watford Hertfordshire WD1 7HE(GB)**

(54) **Method and apparatus for displaying RGB and sync video without auxiliary frame storage memory.**

(57) Disclosed is a method and apparatus for supplying a video input to a liquid crystal display device (10). The input video is sampled and analyzed to determine the existing video format. The video is then conditioned to be compatible with the LCD display device (10). If the number of lines in the input video are substantially less than the number of display lines available in the LCD (10), an alternate frame display mode is enabled in which every other video frame is displayed such that the display frame rate is one half of the input video frame rate. The "latency" of the LCD display device (10) aids in avoiding any apparent flicker in the displayed video. If the number of lines in the input video is one half or less than the number of display lines available, the input video is supplied to a line buffer memory (38) which is read out to the LCD (10) at twice the video input line rate with the result that each line of the displayed video is a double scan of the input video to provide a more pleasing video image covering a greater portion of the LCD display panel.

FIG. 3

EP 0 502 600 A2

The present invention relates generally to video data processing techniques and specifically to a unique method and apparatus for displaying video information on a thin film transistor liquid crystal display without the use of an auxiliary frame storage memory.

Thin film transistor (TFT) liquid crystal display (LCD) devices are well known as being capable of displaying video information. There have been numerous patents issued covering various applications and modifications of TFT technology to LCD display systems, for example, US Patent 4,851,827, US Patent 4,899,141, and US Patent 4,931,787.

Several major LCD suppliers (Sharp, Hitachi, etc) have introduced high resolution, color, thin film transistor displays (for example the Sharp Corporation LCD Model No LQ10P011) which are priced so as to be competitive with computer applications such as monitor replacement (replacement of the cathode ray tube (CRT)) and computer display projection systems, as shown in US Patents 4,763,993 and 4,976,536.

For various economic reasons, such displays are designed for use with current high-end computer video standards (VGA and Apple Mac II) where the term "video standard" is the manner in which video data as well as horizontal and vertical sync and scan signals are in a specific format. As a result of the publicly available specification sheets on such high-end computer video standards, the timing requirements are very specific to those standards and systems designed to be applicable to one standard may not be compatible to a different standard.

In many business applications, it is desirable for a remote computer video product (a "remote" video product is one which does not have direct access to the computer data bus and memory map but rather is supplied video data by way of a serial bus such as standard RGB and sync format systems) to display video information. Such display of video information may be by way of an LCD based projection system (such as disclosed in US Patent 4,763,993) or by way of a low stress workstation (such as is disclosed in US Patent 4,976,536). Therefore, it is desirable for any remote system to be compatible with not only the current video standards of VGA and/or Mac II but also to be "backward compatible" with older video standards such as EGA, CGA, Apple II, Mac, Hercules, etc.

Current design for thin film transistor liquid crystal displays utilizes an individual cell which has electrical characteristics very similar to a Dynamic Random Access Memory (DRAM). The cell or pixel, when addressed and driven, accepts a data charge which in turn excites the liquid crystal material in the vicinity. In advanced displays, the magnitude of the charge can be controlled and thus contrast ratio/color intensity can be controlled. In a standard application i.e., VGA video display, each of the cells or pixels are being addressed and driven in a serial fashion at a rate of approximately 25 million pixels per second, such that each pixel is addressed and redriven once every 1/60 to 1/70 of a second.

In such high speed displays, when the thin film transistor is deselected (in order to supply data to the next row of pixels), the data charge in the vicinity of the liquid crystal material remains for a substantial period of time. While the charge will begin to decay immediately, such decay does not noticeably effect the pixel contrast unless the redrive or refresh signal does not occur for a period of time substantially longer than the video refresh rate of about 16 milliseconds (approximately 1/60 of a second). In short, like a DRAM cell, a TFT liquid crystal cell will accept a new charge value very rapidly (in a period of time less than one millisecond) and will maintain that charge with only modest decay for as long as one hundred milliseconds or more.

In order to achieve uniformity of display, minimize the drive electronics required and to prevent polarization of the liquid crystal cells that might result from an application of other than zero RMS voltage excitation of the material, the drive electronics in current TFT panels generally require that the entire panel be "scanned" on a regular basis.

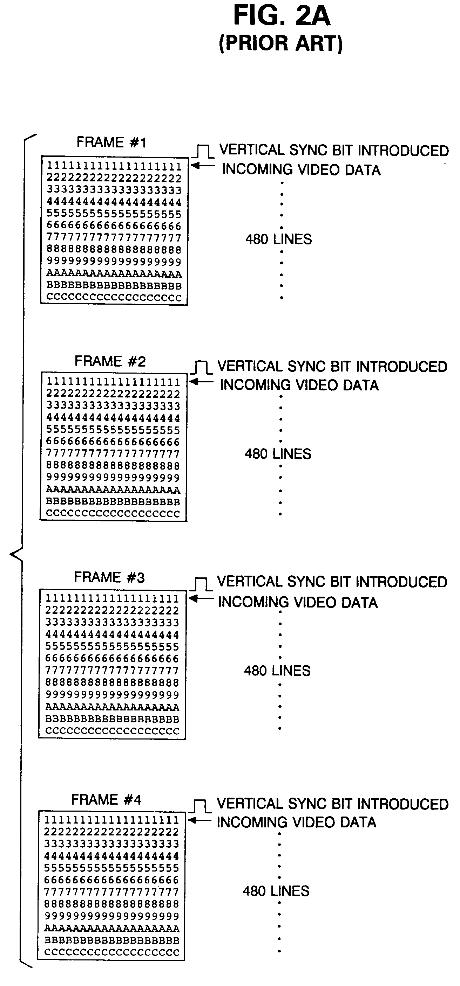

Reference may be had to the Figure 2A embodiment which shows a typical prior art system whereby there are 480 lines of data and 480 lines on the LCD display device such that each frame completely covers the display and the vertical sync bit introduced at the end of the video data triggers the displaying of the next frame of video data.

With respect to the electronic timing "architecture" used with conventional panel controllers (generally derived for use with CRT displays), it is impossible to partially scan a panel and immediately retrace to the beginning of a line or to the top of the screen without completing the line or screen scan. Thus, the designer of remote display products is faced with a barrier to directly scanning lower resolution video formats onto a high resolution TFT panel.

By way of example, displaying EGA (enhanced graphics adaptor) video data presents a significant problem. Standard EGA video data comprises 350 lines of video data followed by approximately 16 lines of vertical blanking which is provided for the "retracing" of a CRT's cathode ray. Scanning the 350 lines of data onto the top of an LCD panel is straightforward. However, after having scanned the first 350 lines of the panel, the designer is required to scan the remaining 130 lines (480 total in the panel minus 350 in the video data) of the panel before proceeding to the next frame.

In order to maintain synchronization or "sync" with the incoming EGA data, the scan completion would have to occur within the 16 line blanking period provided for by the EGA standard. The designer does have the option of introducing a new scan bit onto the panel before the last bit has been scanned off of the bottom but this results in a portion of the incoming data being scanned onto the panel in two locations.

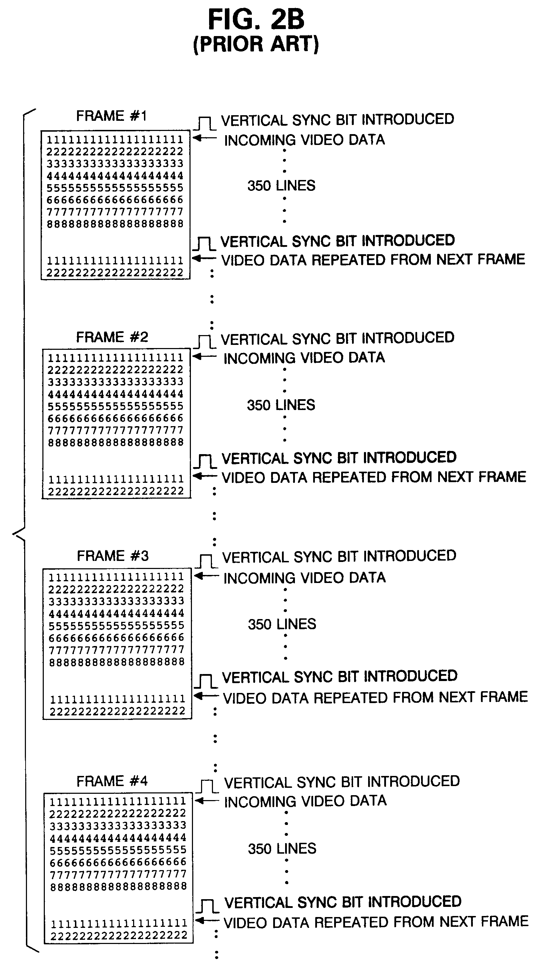

However, where as noted above, the number of lines of video data are less than the number of lines on the TFT LCD, the vertical sync bit will be introduced before the scan has reached the bottom of the LCD display as in the situation shown in Figure 2B. As a result, after the 16 line blanking period, the video data from the next frame will begin to be displayed until the end of the panel is reached whereupon it will reset to display the beginning of the incoming video data. This results in incoming data being scanned onto the LCD into separate locations. Generally, this results in the top of the display being repeated at the bottom of the screen where it must either be ignored by the user or mechanically/optically blocked off from view.

The conventional approach to solve this problem is to provide an auxiliary frame storage buffer which is supplied by the video data input but addressed and read out in accordance with the clock requirements of the LCD display. Unfortunately, many typical displays are 640 x 480 x 3 color pixels where each pixel requires an 8 bit color indicator. Such a system can require a 7 megabyte frame storage device.

Additionally, with auxiliary frame storage mediums, there are time delays and penalties incurred in reading the video information into such a large frame storage device and then reading it out with the appropriate timing to display the information on the LCD display.

Moreover, where the number of lines in the incoming video signal to be displayed is less than half of the total lines of video available for display on the display device, the video image will be substantially distorted and cover less than half the display device.

In view of the above disadvantages of such video processing systems, it is an object of the present invention to provide a system for displaying video data on a TFT LCD display without providing an auxiliary or separate frame storage and addressing system.

It is a further object of the present invention to provide "full" (as close to vertically complete as possible) frame video on the LCD display where the lines of input video are one half or less than the number of lines of the TFT LCD display.

The above and other objects are achieved by utilizing the "latency" of a TFT cell to maintain the displayed video of one frame over the time period necessary for two frames of video information to be read in with input data for a second frame being disregarded. Essentially, only alternate frames of video information are displayed with the display being held for the second frame. Because of the alternate frame display, the video display rate is at 30 frames per second instead of the standard 60 frames per second. However, absent an extremely high speed movement on the video display, the appearance of both displayed images will be equal without the need for a frame buffer and a full speed (60 hertz) refresh system.

In a further embodiment, where the video data to be displayed has one half or less lines than the total lines available for display in the TFT LCD, a line buffer memory is provided to permit each of the input video lines to be double scanned onto the output display so as to provide a more pleasing size image for display.

A better understanding of the method and apparatus for displaying RGB and sync video without auxiliary frame storage requirements may be had by reference to the accompanying drawings, in which:

FIGURE 1 is a schematic circuit illustrating a conventional TFT liquid crystal display device known in the prior art;

FIGURE 2A is an illustration of four consecutive frames in which 480 lines of video data are supplied to a 480 line LCD display as known in the prior art;

FIGURE 2B is an illustration of four consecutive frames in which 350 lines of video data are supplied to a 480 line LCD display as known in the prior art;

FIGURE 2C is an illustration of four consecutive frames in which 350 lines of video data input is displayed on a 480 line LCD in accordance with one embodiment of the current invention; and

FIGURE 3 is a block diagram illustrating data and sync control paths for a preferred embodiment of the present invention.

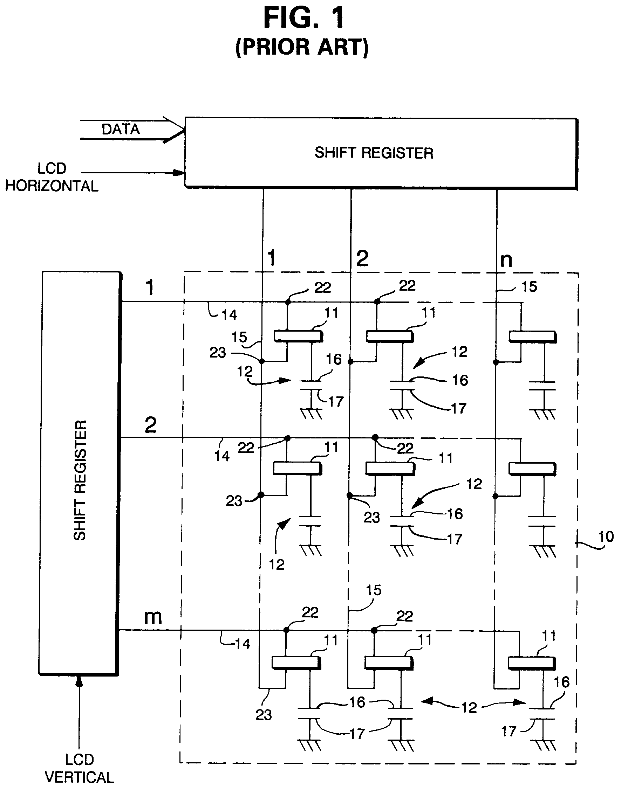

Referring to Figure 1, a conventional prior art thin film transistor liquid crystal display system is schematically illustrated. The active matrix addressed liquid crystal display 10 comprises m rows (1 to m) with n (1 to n) horizontally arranged display elements 12 in each row. For simplicity, only a few display elements are shown, although in practice a suitable LCD (such as the previously discussed Sharp LCD panel) would have 480 rows with 640 elements in each row comprising pixels and each pixel would include three separately activated elements, one for each of the three major colors, red, green and blue. Therefore, there could be over 900,000 discrete elements in such an array.

Each display element 12 has a thin film transistor switching element 11 associated therewith. The switching element 11 associated with all of the display elements in a common row are connected to row conductor 14 which is supplied at interconnection 22. The switching elements are interconnected at column interconnection 23 to column conductor 15 which provides data signal voltages for each column. Outputs from each of the TFT switching elements is supplied to electrode 16.

A common electrode 17, common to all display elements, is actually carried on an adjacent substrate parallel to and spaced from the substrate containing respective pixel electrodes 16. The space between pixel electrode 16 and common electrode 17 has a liquid crystal material located therebetween and the LCD panel may have an appropriate polarizer and analyzer located above and below the substrate as appropriate.

During operation, the device is driven on a row at a time basis by scanning the row conductors 14 sequentially with a switching signal so as to turn on all the switching means in each row in turn and applying data signals to the column conductors for each column in a row as appropriate. When a row 14 is energized, the column 15 information is applied as a discrete voltage to the respective pixel electrode 16.

Due to the electrostatic charge on the pixel electrode 16, the liquid crystal material sandwiched between electrode 16 and the adjacent portion of common electrode 17 will be twisted or untwisted (depending upon the type of liquid crystal material) so as to affect the transmission of light through the panel in a controlled fashion. Importantly, when row conductor 14 is disabled, the voltage that was applied on column conductors 15 (during the time the row conductor was enabled) remains applied to the pixel electrode 16. The pixel electrode 16 can be thought of as one plate of a capacitor and the voltage applied will remain (i.e., in the form of a charge stored on the capacitor formed by electrode 16 and common electrode 17) for some period of time (it will decay with a time constant proportional to the product of the resistance through the thin film transistor to ground and the capacitance between the pixel electrode 16 and the common electrode 17).

As previously noted, the charge on the pixel electrode 16 will remain with only a minor decay for as long as one hundred milliseconds or more. Applicant has found that this "memory" or "latency" characteristic of a thin film transistor display element can be utilized to eliminate the need for an auxiliary frame storage buffer. The elimination of an auxiliary frame storage buffer simplifies the timing requirements of storing and addressing such a relatively large amount of memory data, thereby lowering the cost of thin film transistor display systems.

With respect to the majority of computer applications in which a remote display is driven by a serial bus containing standard RGB and sync format video data, a standard video update rate of approximately 60 frames per second is unnecessary. Actually, a video update rate of 30 frames per second is more than sufficient for flicker-free viewing given the "latency" of the TFT LCD pixel.

In a preferred embodiment of the present invention, when an incoming video display is sensed that has too few lines for scanning all (or at least most) of the LCD panel, the system will revert to a "latency" display mode wherein one complete frame of data will be scanned onto the panel after which all additional data will be disregarded causing the data originally supplied to pixel electrodes 16 to remain. Scan signals generated by the "latency" frame will be used to complete the TFT frame scan. More often than not, the frame scan will be completed long before the latency frame is complete. However, the introduction of a new scan bit in the vertical scan shift register will be suppressed until the beginning of the next frame. The term "blanking" will be used to mean that video data is not clocked or read onto the LCD panel, whether by suppression of the vertical sync bit, suppressing the LCD clock pulse(s), etc.

Thus, the LCD panel update rate will be synchronized to alternating frames of incoming data with intervening frames being disregarded. Therefore, it is only necessary to synchronize the blanking of the LCD panel with the incoming video sync and provide appropriate data suppression or blinking signals to achieve this operation. The consequence of applying video data to a conventional LCD system where the video data has fewer rows or lines than does the LCD display element is shown in Figure 2B and it can be seen that the incoming video data is partially repeated at the bottom of the display with respect to each frame of information displayed. This is due in fact to the vertical sync bit introduction, approximately 16 milliseconds after the end of the 350 lines of video data, which starts the second frame video to be displayed on the remainder of the first frame.

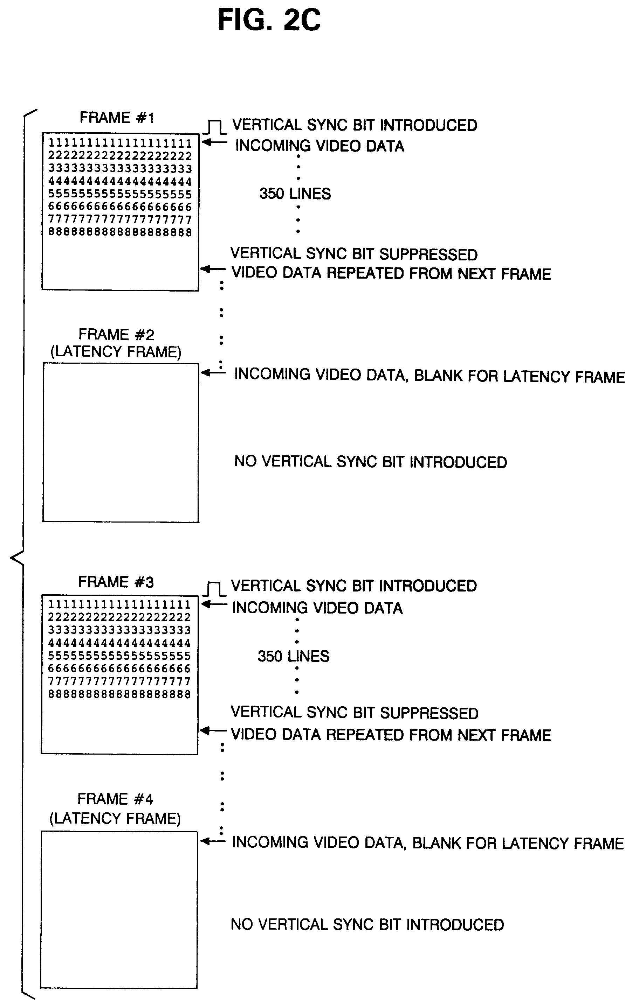

Figure 2C illustrates the present invention in which the incoming video data is displayed for one frame and the next immediate frame has the vertical sync bit suppressed or "blanked" electronically, permitting the individual pixel electrode 16 to maintain the data supplied in the preceding frame. In effect, the frame rate is reduced by half and the image from one frame is held twice as long.

It can be seen that with appropriate LCD horizontal and LCD vertical synchronizing pulses and application of data input, the display of Figure 1 will operate as desired. Such a device has been tested and in all but the fastest display update situations, the quality of the displayed image fully equalled that which could be obtained utilizing a frame buffer and full speed (60 Hertz) refresh. The extended scan period and resulting deeper pixel decay do not produce any perceptible flicker or significant contrast/color saturation degradation.

A further problem with prior art video display systems, as noted earlier, is where the video input has less than one half of the number of lines available on the LCD panel. In such an instance, normally the video signals are displayed on the top half of the LCD panel with a result that the video is extremely compressed.

Since the entire LCD panel is available for video display, it would be advantageous to utilize the entire LCD panel even if the number of lines in the display exceeded the number of lines of video input. This is accomplished in a preferred embodiment of the present invention by providing a line buffer memory, in a preferred embodiment is a First-In, First-Out (FIFO) memory, which provides for an effective storage of 640 pixels (3 each if color is stored). Each of the lines can be double scanned so that each line of incoming video can be displayed on two adjacent lines of the LCD panel. This results in a more pleasing appearance of the video and a better image aspect ratio.

The use of line buffer memories to generate a complete video image from one frame of an interlaced sequence to the next, has been employed in the cathode ray tube television industry in recent years. The technique and the specialty memories required for the interlaced problem are directly applicable to LCD scanning systems. In short, the line buffer is used to buffer one line of incoming video signal which is then scanned out to the LCD at a clock rate that is double that of the incoming video signal. The buffered video to the LCD is thus read from the line buffer twice for each single line of input video that is written into the line buffer and a double scanned image on the LCD results.

It can be seen, for example, that where the incoming video lines are less than half the available lines on the LCD panel, the problem of additional video being displayed at the bottom of the LCD frame such as that shown in Figure 2B can occur. This could be true whether or not the double scanning solution is utilized. Even if double scanning is utilized, the above described "latency" blanking technique could also be employed to yield the best quality image.

The latency blanking technique and the double scanning technique described above require a generation and coordination of synchronization or sync signals which can be achieved in a variety of ways.

It is desirable that there be a pixel clock which can be phase and frequency locked to the video source clock. In a remote video display, of course, only RGB and sync information are available and thus it is necessary regenerate the video source or pixel clock from either the horizontal or vertical sync signal.

It is also desirable to be able to generate a variety of sync control signals to be used for LCD horizontal, vertical and data timing data blanking during latency frames and line buffer timing for display of the double scanning video output. It is also desirable to have the sync generation system configurable under microprocessor control in order to provide instant compatibility with a variety of different video signal input formats.

In operation, it is beneficial if the format of the input video signals is automatically identified by a microprocessor, a variety of parameters related to the identified video format are retrieved from the lookup table and timing logic is reconfigured to support such video format. Alternatively, if the incoming video format is known, it can be manually selected such that the microprocessor is not required to identify and merely provides the parameters associated with the known video format. The horizontal and vertical sync pulses of the input video are analyzed by the micro-controller to determine the horizontal line frequency and the frame frequency, and the signal relationship (inverted, etc.). With this information, a look-up table identifies the input video and provides the latency timing, double scanning, direct drive are enabled or disabled and the video data timing is adjusted as required in order to provide a desired video output to the LCD based on the video input.

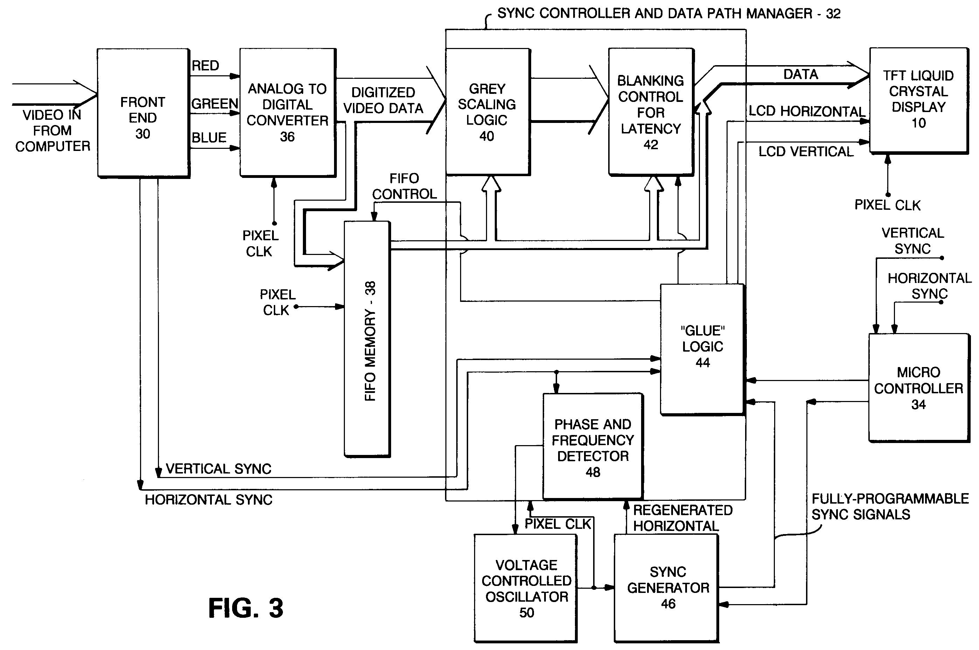

A preferred embodiment which accomplishes all of the above is shown in Figure 3. The analog, digital, composite, TTL, etc. video input comprising RGB and sync data is supplied from the computer to Front End 30. The Front End 30 comprises conventional circuitry for processing the incoming video data to be compatible with the A-to-D converter. The Front End 30 provides the red, green, blue analog outputs as well as vertical sync and horizontal sync output signals from the input video. The vertical sync and horizontal sync information go to the Sync Controller and Data Path Manager 32 as well as to Micro-Controller 34. In the event the video input is not in color and is, instead monochromatic, the analog monochromatic output is supplied in place of the analog red, green and blue output signals. As may be necessary in some video formats the Front End can also provide multiplexing and/or sync separation as required.

The micro-controller in a preferred embodiment is an Intel 8051 microprocessor chip which, upon analysis of the vertical sync and horizontal sync signals, can identify the video input as being VGA, Mac II, EGA, CGA, Apple II, Mac, Hercules or any other video format with which LCD operational compatibility is desired. Detection software is conventional, as is found in "multi-sync" CRT monitors. The micro-controller also stores, in a lookup table, the horizontal and vertical sync parameters for displaying such video and if "blanking" and/or "double scanning" is desirable for such an input signal, the micro-controller 34 output controls and reconfigures the Sync Controller and Data Path Manager 32 to be compatible with the sensed input video.

The video data from the front end 30 in analog form is supplied to analog-to-digital converter 36 and the resulting digitised video data is applied to the sync controller and data path manager 32 as well as line buffer memory 38. As noted earlier, in a preferred embodiment a First-In, First-Out (FIFO) memory is utilized for line buffer memory 38 and such a memory system is available from NEC Model chip number 42101.

The Sync Controller and Data Path Manager 32 in a preferred embodiment, is a Field Programmable Gate Array Logic chip made by Xilinx Corporation, Model 3020, which is programmed to contain four separate control functions. A Grey Scaling logic 40 is used to provide a digitized video data output which will accurately reflect, when applied to the TFT liquid crystal display, the variations in color hue and intensity provided as a video data input. The Grey Scaling logic functional block 40 also has a video data input from the line buffer memory so that, if double scanning is required, the line buffer memory will supply the "second" line of video data for subsequent grey scaling logic to be applied, such that the grey scaling logic output will be two identical lines of vertical data sequentially one at a time.

The output of the grey scaling logic circuit 40 is applied to the Blanking Control for Latency circuit 42 which under the control of the micro-controller 34 through "Glue" logic circuit 44 provides the blanking of alternate frames of video data where blanking is determined to be necessary or desirable. The output of blanking control for latency circuit 42 is video data applied to the liquid crystal display 10.

Micro-controller 34 provides a control signal to the "Glue" logic 44 which serves to provide the desired timing relationship between the various sync signals so that video data from the line buffer memory and/or the Blanking Control for Latency circuit 42 are clocked into the data input for the LCD 10 in an appropriate fashion. The "Glue" logic not only has as inputs the original vertical and horizontal sync signals and the micro-controller 34 output, but also includes as an input a fully-programmable sync signal from a Sync Generator 46.

Sync Generator 46 in a preferred embodiment, is a National Semiconductor LM1882 which provides fundamental timing signals and is programmable to produce any desired output sync signal based on the oscillator timing input signal. The Sync Generator 46 operates under the control of the Micro-Controller 34 such that it will generate the appropriate sync signals necessary for compatibility with the video data input which is sensed by the Micro-Controller 34.

A portion of the Sync Controller and Data Path Manager 32 is also utilized as a Phase and Frequency Detector 48. The Phase and Frequency Detector 48 utilizes horizontal sync inputs from the Front End 30 to control a Voltage Controlled Oscillator (VCO) 50 which provides a regenerated source or pixel clock output to the Sync Generator 46 and to the Sync Controller and Data Path Manager 32. The regenerated pixel clock output in the Sync Generator is supplied back to the Phase and Frequency Detector 48 as a regenerated horizontal sync. Because the pixel clock is utilized by virtually all the other systems, many of the individual connections have not been shown or are represented by the arrow supplying pixel clock information to the Sync Controller and Data Path Manager 32.

It should be noted that a sync generator is traditionally used by a video source whereas the present device is remote from video source and therefore can be considered a video receiver. Through the use of the VCO 50 and a phase and frequency sensitive control loop including the Sync Generator 46 and the Phase and Frequency Detector 48 which provides a regenerated horizontal sync, the present invention utilizes a regenerated sync system which is phase and frequency locked to the incoming video signal but which is completely reconfigurable under the control of micro-controller 34.

In conjunction with the micro-controller control, the field programmable gate array logic, which comprises the sync controller and data path manager 32, is able to reconfigure the system to support or provide meaningful video output data to a TFT liquid crystal display system with virtually any incoming video signal. The combination of a line buffer memory, a sync generator chip, a field programmable gate array and a highly responsive clock regeneration system, all under microprocessor control from micro-controller 34 allows full exploitation of the "latency" characteristics of a TFT LCD display.

A major benefit is the ability to utilize TFT memory characteristics so as to achieve broad video standard compatibility with the only system memory being provided as the processor memory included within micro-controller 34 and the line buffer memory 38. The ability to utilize multiple video inputs without the requirement of an auxiliary frame store system is very significant. As the number of colors or graduation in colors are increased, it results only in a minor increase in complexity of the field programmable gate array, the resolution of Front End device 30 and the line buffer memory. Prior art video managers for TFT or other LCD systems which utilize an auxiliary frame store, require dramatic increases in the size of the frame store in order to handle any increased color capability. This renders such systems larger, bulkier, more expensive to produce and generally less desirable.

The following are examples outlining the unique actions by the Figure 3 circuitry to display 3 common videos on the LCD panel:

## I. VGA VIDEO

VGA video is the most common video type for IBM computers. There are over sixteen different VGA modes which are defined in the prior art. Three representative modes are described below:

### A. VGA GRAPHICS MODE PARAMETERS

31 KHZ horizontal scan rate.
60 HZ vertical frame rate.
640 Displayed horizontal pixels.
160 Non-displayed horizontal (blanking) pixels.
480 Displayed vertical lines.
45 Non-displayed vertical lines
25 MHZ pixel clock.
Horizontal sync is mostly positive with small pulses going to zero.
Vertical sync is also mostly positive.

### B. VGA TEXT MODE PARAMETERS

31 KHZ horizontal scan rate.
70 HZ vertical frame rate.
720 Displayed horizontal pixels.
180 Non-displayed horizontal pixels.
400 Displayed vertical lines.
49 Non-displayed vertical lines.
28 MHZ pixel clock.
Horizontal sync is mostly positive with small pulses going to zero.
Vertical sync is also mostly positive.

### C. EGA EMULATION MODE PARAMETERS

31 KHZ horizontal scan rate.
70 HZ vertical frame rate.
640 Displayed horizontal pixels.
180 Non-displayed horizontal pixels.
350 Displayed vertical lines.

100 Non-displayed vertical lines.
28 MHZ pixel clock.
Horizontal sync is mostly positive with small pulses going to zero.
Vertical sync is also mostly negative with positive going sync pulses.

As shown in the Figure 3 diagram, the 8051 processor of Micro-Controller 34 is constantly monitoring the characteristics of the horizontal and vertical sync signals being supplied as video input. The frequency of the sync signals are based upon the 8051's clock crystal, i.e., the frequency is computed in terms of clock cycles occurring in a sync interval. The above video formats are first identified by the horizontal sync rate of 31 KHZ. This rate is common to the three videos yet is unique with respect to other input video formats that may be applied to the unit (i.e. Apple Macintosh II Video which has a horizontal sync rate of approx. 34 KHZ). These three video formats are then sorted out from each other by subsequently examining the vertical frame rate and the "sense" of the vertical sync signal (i.e. is the sync mostly positive or mostly negative?). As can be seen, this uniquely identifies each of these videos.

Once identified, these videos are treated as follows:

1) VGA Graphics: The sync generator 46 is programmed to deliver a regenerated horizontal sync signal every 800 counts from VCO 50 pixel clock output. This regenerated horizontal sync is then continuously phase and frequency compared in the Detector 48 to the incoming horizontal sync and the pixel clock is produced. The Sync Generator 46 is further programmed to provide a regenerated vertical sync. The pixel clock is used to drive 3 high speed flash A/D converters in Converter 36 which digitize the incoming color signals. A multi-channel D/A converter may be included and is programmed to control gain in the Front End 30 and adjusts converter offsets for proper contrast and brightness. The pixel clock is also used to periodically re-synch the digitized video data.

The digitized video is processed by the Grey Scaling Logic 40 and then is clocked onto the LCD panel by the "Glue" Logic using the regenerated horizontal and vertical signals. Since the incoming video is 640x480 pixel formal as is the LCD panel, no special considerations are required for proper display.

2) VGA text: The Sync Generator 46, D/A converters and "Glue" Logic are programmed as above. However, a VGA text screen has only 449 lines with only 400 lines of active display. It would first appear as if the "latency" technique would need to be applied. However, there are 49 lines of blanking which can be safely "double displayed" since they are guaranteed to be black. By carefully positioning (by suitable vertical synce timing adjustment) the displayed image on the LCD, the blanking period is duplicated on the top and the bottom of the screen and the 400 line image is thus displayed without any perceived data duplication from the observer's point of view.

It will also be noted that the VGA text mode is 720 pixels wide. The LCD panel in a preferred embodiment is 640 pixels wide. Ordinarily video data will be lost on one side or the other of the panel. However, VGA text video contains a blank column between each character cell (8 pixels wide). If each blank column is dropped, this then is a reduction of 80 pixels which reduces the VGA text video to exactly 640 pixels.

The 9th pixel is "dropped" in real time by blanking every ninth clock pulse to the LCD panel so that even though the blank column video data is supplied to the LCD, it is not clocked into the display. A similar effect could be achieved by dropping every ninth column in a frame store system although this requires precisely the extra memory requirements that the present invention overcomes.

3) EGA emulation: All parameters are identical to VGA text with the exception of no ninth pixel drop.

## II. EGA VIDEO

EGA video is the 2nd most popular standard on IBM PCs, being the high-end video for about 5 years until VGA was introduced in about 1988.

EGA is identified by the Micro-Controller 34 based on its unique horizontal scan rate of 21.85 KHZ. The video format consists of 350 active lines of display followed by 16 lines of blanking. It should be observed that even if the blanking were double displayed, we are far from being able to scan an entire 480 line LCD within the period of one vertical frame. Therefore, to display EGA video format, the "latency" concept is used and thus the LCD panel is scanned every other frame, using the latency frame, and its suppressed vertical sync bit, to complete the panel scan.

## III. CGA VIDEO

CGA video is an old IBM standard that has been obsoleted by IBM but is still widely used. The video is formatted as 200 lines of 640 pixels each. To effectively display CGA, the double scan technique is used where the "Glue" Logic 44 enables the line buffer (FIFO Memory 38) to begin double scanning which yields a 640x400 line display. It should be noted that the double scanning also doubles the blanking period and thus we are able to display the 640x200 image on the 480 line LCD without requiring the latency technique. If, however, we were to encounter of video of say 150 lines of data, it is possible that we would need to use both "double scan" and "latency" techniques for a most pleasant and effective display.

Therefore, and in view of the above, it will be obvious to one of ordinary skill in the art that there are many modifications and variations of the present invention. Different control chips, microcontrollers, sync generators, FIFOs memory and sync controller and data path managers could be utilized. Additionally, although a preferred embodiment utilizes color RGB video input, monochromatic inputs could also advantageously utilize the present processing system. In fact the present system could advantageously be used with analog video, digital video or composite video signals.

Furthermore, while the present invention is directed towards the providing video output to a TFT liquid crystal display system, other LCD display systems could also be compatible such as MIM (metal-insulator-metal) or PIN diode LCD systems which have similar "latency" characteristics. It is the ability to utilize such "latency" or "memory" characteristics which is significant to the present invention.

Therefore, while the present specification is by way of example only and describes preferred embodiments of the present invention, the invention is not so limited and is only limited by the claims appended hereto.

## Claims

1. A device for remotely displaying input video on a liquid crystal display device, said input video having a number of input video lines provided at an input frame rate, said display device capable of displaying a number of display video lines at a display frame rate and having a latency memory characteristic, without the need for an auxiliary frame storage memory, said device comprising:

front end means, responsive to said video input, for analyzing and processing said input video and providing video output and vertical sync and horizontal sync outputs based upon the analyzed video format information;

analog to digital converter means, responsive to said video output, for providing a digitized video data output;

line buffer memory means, responsive to a line buffer control signal and said digitized video data output, for providing a double scanned output when said video data output has a video signal with less than one half the number of lines available in the display device;

a sync controller and data path managing means responsive to said digitized video data, said line buffer memory means, said horizontal and vertical sync outputs, programmable sync signals, a pixel clock and regenerated horizontal sync signals, for providing data, horizontal sync and vertical sync signals to said display device, said sync controller and data path managing means including:

grey scaling logic means, responsive to said digitized video data and said line buffer memory means, for providing grey scaled video output;

blanking control means, responsive to said grey scaled video output and said line buffer memory means, for providing LCD video data to said liquid crystal display;

phase and frequency detector means, responsive to said horizontal sync output and a regenerated horizontal output, for providing an oscillator control output;

glue logic means, responsive to vertical and horizontal sync information and a fully-programmable sync signal, for providing LCD horizontal and LCD vertical sync data to said display device;

voltage controlled oscillator, responsive to said oscillator control output, for providing a pixel clock oscillator output;

sync generator means, responsive to said oscillator output, for providing said regenerated horizontal output to said phase and frequency detector means, and a fully programmable sync signal output to said glue logic means;

micro controller means, responsive to said sync signal output, for providing a controlled sync signal to said glue logic means.

2. A device for remotely displaying input video on a liquid crystal display device, said input video having a number of input video lines provided at an input frame rate, said display device capable of displaying a number of display video lines at a display frame rate and having a latency memory characteristic, without the need for an auxiliary frame storage memory, said device comprising:

front end means, responsive to said input video, for processing and analyzing said input video for format information including said number of input video lines, providing a digitized video output, vertical sync and horizontal sync outputs based upon the analyzed video format information, and providing an indication that the input video lines are less than the display video lines; and

blanking control means, responsive to said digitized video output and said indication that the input video lines are less than the display video lines, for providing alternating frames of digitized video output to said liquid crystal display, said alternate frames of video output separated by a suppressed vertical sync bit such that said frame rate of the input video is reduced by one half.

3. A device for remotely displaying input video on a liquid crystal display device, said input video having a number of input video lines provided at an input frame rate, said display device capable of displaying a number of display video lines at a display frame rate and having a latency memory characteristic, without the need for an auxiliary frame storage memory, said device comprising:

front end means, responsive to said input video, for processing and analyzing said input video for format information including said number of video input lines, for determining whether said number of input video lines is less than one half the number of video display lines and providing a digitized video output and vertical sync and horizontal sync outputs based upon the analyzed video format information; and

line buffer memory means, responsive to a line buffer control signal and said digitized video data output, for providing a double scanned video output to said LCD when said video data output has a video signal with less than one half the number of lines available in the display device; and

sync controller and data path managing means, responsive to said input video lines being less than one half the display video lines, for providing a line buffer control signal.

4. A method of remotely displaying input video on a liquid crystal display device, said input video having a number of input video lines provided at an input frame rate, said display device capable of displaying a number of display video lines at a display frame rate and having a latency memory characteristic, without the need for an auxiliary frame storage memory, said method comprising the steps of:

processing and analyzing said input video and providing video output and vertical sync and horizontal sync outputs based upon the analyzed video format information;

converting said video output to a digitized video data output;

providing, in response to said digitized video data output and a buffer control signal, a double scanned output when said video data output has a video signal with a number of lines which are less than one half the number of lines available in the display device;

supplying, in response to said digitized video data, said double scanned output, said horizontal and vertical sync outputs, as well as programmable sync signals, pixel clock and regenerated horizontal sync signals, video output, horizontal sync and vertical sync signals to said display device, said supplying step including:

grey scaling said digitized video data and providing grey scaled video output;

suppressing any vertical scan bit signals in said grey scaled video output when said number of display video lines is less than said number of input video lines and providing LCD video data to said liquid crystal display;

generating, in response to said horizontal sync output, an oscillator control output;

providing, in response to vertical and horizontal sync information and a fully-programmable sync signal, LCD horizontal and LCD vertical sync data to said display device;

generating a pixel clock oscillator output in response to said oscillator control output;

providing in response to said oscillator output, said regenerated horizontal output, and a fully programmable sync signal output;

providing, in response to said sync signal output, a controlled sync signal.

5. A method remotely displaying input video on a liquid crystal display device, said input video having a number of input video lines provided at an input frame rate, said display device capable of displaying a number of display video lines at a display frame rate and having a latency memory characteristic, without the need for an auxiliary frame storage memory, said method comprising the steps of:

processing and analyzing said input video for video format information, and providing a digitized video output, and providing an indication that the input video lines are less than the display video lines; and

providing, in response to said indication, said video format information and said digitized video output, alternating frames of digitized video output to said liquid crystal display, said alternate frames of video output separated by a suppressed vertical sync bit such that said display frame rate is one half said frame rate of the input video.

6. A method of remotely displaying input video on a liquid crystal display device, said input video having a number of input video lines provided at an input frame rate, said display device capable of displaying a number of display video lines at a display frame rate and having a latency memory characteristic, without the need for an auxiliary frame storage memory, said device comprising:

analyzing and processing said input video for video format information including said number of video input lines, and providing an output indication when said number of input video lines is less than one half the number of video display lines and providing a digitized video output; and

providing, in response to said output indication and said digitized video output, a digitized video output to said LCD comprising two duplicate lines of display digitized video for each line of digitized video output such that said display displays the input image over twice the number of lines supplied by the input video.

# FIG. 1
## (PRIOR ART)

# FIG. 2A
## (PRIOR ART)

FRAME #1    ⊓ VERTICAL SYNC BIT INTRODUCED
← INCOMING VIDEO DATA

```
1111111111111111111
2222222222222222222
3333333333333333333
4444444444444444444
5555555555555555555
6666666666666666666
7777777777777777777
8888888888888888888
9999999999999999999
AAAAAAAAAAAAAAAAAAA
BBBBBBBBBBBBBBBBBBB
CCCCCCCCCCCCCCCCCCC
```
480 LINES

FRAME #2    ⊓ VERTICAL SYNC BIT INTRODUCED
← INCOMING VIDEO DATA

```
1111111111111111111
2222222222222222222
3333333333333333333
4444444444444444444
5555555555555555555
6666666666666666666
7777777777777777777
8888888888888888888
9999999999999999999
AAAAAAAAAAAAAAAAAAA
BBBBBBBBBBBBBBBBBBB
CCCCCCCCCCCCCCCCCCC
```
480 LINES

FRAME #3    ⊓ VERTICAL SYNC BIT INTRODUCED
← INCOMING VIDEO DATA

```
1111111111111111111
2222222222222222222
3333333333333333333
4444444444444444444
5555555555555555555
6666666666666666666
7777777777777777777
8888888888888888888
9999999999999999999
AAAAAAAAAAAAAAAAAAA
BBBBBBBBBBBBBBBBBBB
CCCCCCCCCCCCCCCCCCC
```
480 LINES

FRAME #4    ⊓ VERTICAL SYNC BIT INTRODUCED
← INCOMING VIDEO DATA

```
1111111111111111111
2222222222222222222
3333333333333333333
4444444444444444444
5555555555555555555
6666666666666666666
7777777777777777777
8888888888888888888
9999999999999999999
AAAAAAAAAAAAAAAAAAA
BBBBBBBBBBBBBBBBBBB
CCCCCCCCCCCCCCCCCCC
```
480 LINES

# FIG. 2B
## (PRIOR ART)

FRAME #1

```
11111111111111111
22222222222222222
33333333333333333
44444444444444444
55555555555555555
66666666666666666
77777777777777777
88888888888888888

11111111111111111
22222222222222222
```

⊓⊔ VERTICAL SYNC BIT INTRODUCED
← INCOMING VIDEO DATA

350 LINES

⊓⊔ VERTICAL SYNC BIT INTRODUCED
← VIDEO DATA REPEATED FROM NEXT FRAME

FRAME #2

```
11111111111111111
22222222222222222
33333333333333333
44444444444444444
55555555555555555
66666666666666666
77777777777777777
88888888888888888

11111111111111111
22222222222222222
```

⊓⊔ VERTICAL SYNC BIT INTRODUCED
← INCOMING VIDEO DATA

350 LINES

⊓⊔ VERTICAL SYNC BIT INTRODUCED
← VIDEO DATA REPEATED FROM NEXT FRAME

FRAME #3

```
11111111111111111
22222222222222222
33333333333333333
44444444444444444
55555555555555555
66666666666666666
77777777777777777
88888888888888888

11111111111111111
22222222222222222
```

⊓⊔ VERTICAL SYNC BIT INTRODUCED
← INCOMING VIDEO DATA

350 LINES

⊓⊔ VERTICAL SYNC BIT INTRODUCED
← VIDEO DATA REPEATED FROM NEXT FRAME

FRAME #4

```
11111111111111111
22222222222222222
33333333333333333
44444444444444444
55555555555555555
66666666666666666
77777777777777777
88888888888888888

11111111111111111
22222222222222222
```

⊓⊔ VERTICAL SYNC BIT INTRODUCED
← INCOMING VIDEO DATA

350 LINES

⊓⊔ VERTICAL SYNC BIT INTRODUCED
← VIDEO DATA REPEATED FROM NEXT FRAME

13

# FIG. 2C

FRAME #1 ⊓ VERTICAL SYNC BIT INTRODUCED

```
11111111111111111111
22222222222222222222
33333333333333333333
44444444444444444444
55555555555555555555
66666666666666666666
77777777777777777777
88888888888888888888
```

← INCOMING VIDEO DATA

350 LINES

VERTICAL SYNC BIT SUPPRESSED

← VIDEO DATA REPEATED FROM NEXT FRAME

FRAME #2
(LATENCY FRAME)

← INCOMING VIDEO DATA, BLANK FOR LATENCY FRAME

NO VERTICAL SYNC BIT INTRODUCED

FRAME #3 ⊓ VERTICAL SYNC BIT INTRODUCED

```
11111111111111111111
22222222222222222222
33333333333333333333
44444444444444444444
55555555555555555555
66666666666666666666
77777777777777777777
88888888888888888888
```

← INCOMING VIDEO DATA

350 LINES

VERTICAL SYNC BIT SUPPRESSED

← VIDEO DATA REPEATED FROM NEXT FRAME

FRAME #4
(LATENCY FRAME)

← INCOMING VIDEO DATA, BLANK FOR LATENCY FRAME

NO VERTICAL SYNC BIT INTRODUCED

FIG. 3

SYNC CONTROLLER AND DATA PATH MANAGER - 32

VIDEO IN FROM COMPUTER

FRONT END 30

RED
GREEN
BLUE

ANALOG TO DIGITAL CONVERTER 36

DIGITIZED VIDEO DATA

GREY SCALING LOGIC 40

BLANKING CONTROL FOR LATENCY 42

DATA

TFT LIQUID CRYSTAL DISPLAY 10

LCD HORIZONTAL

LCD VERTICAL

PIXEL CLK

PIXEL CLK

FIFO CONTROL

FIFO MEMORY - 38

PIXEL CLK

VERTICAL SYNC

HORIZONTAL SYNC

"GLUE" LOGIC 44

PHASE AND FREQUENCY DETECTOR 48

PIXEL CLK

REGENERATED HORIZONTAL

VERTICAL SYNC

HORIZONTAL SYNC

MICRO CONTROLLER 34

FULLY-PROGRAMMABLE SYNC SIGNALS

VOLTAGE CONTROLLED OSCILLATOR 50

SYNC GENERATOR 46

EP 0 502 600 A2